# EUROPEAN PATENT SPECIFICATION

(11) **EP 1 575 041 B1**
(45) Date of publication and mention of the grant of the patent: **25.02.2009**
(21) Application number: 03780717.9
(22) Date of filing: 11.12.2003
(51) Int. Cl.: G11B 7/24, G11B 7/26

(54) **OPTICAL INFORMATION RECORDING MEDIUM AND METHOD FOR MANUFACTURING SAME**
OPTISCHES INFORMATIONSAUFZEICHNUNGSMEDIUM UND VERFAHREN ZU SEINER HERSTELLUNG
SUPPORT D'ENREGISTREMENT D'INFORMATIONS OPTIQUE ET PROCEDE DE FABRICATION DE CELUI-CI

(30) Priority: 13.12.2002 JP 2002362046
(43) Date of publication of application: 14.09.2005
(73) Proprietor: Panasonic Corporation, Kadoma-shi Osaka 571-8501 (JP)
(72) Inventor: SAKAUE, Yoshitaka, Hirakata-shi, Osaka 573-0075 (JP); NAGATA, Ken'ichi c/o Matsushita Electric Ind. Co.,, Chuo-ku, Osaka-shi, Osaka 540-6319 (JP)
(74) Representative: Eisenführ, Speiser & Partner
(86) International application number: PCT/JP2003/015832
(87) International publication number: WO 2004/055800

(56) References cited:
- EP-A- 1 551 018
- EP-A2- 1 172 811
- JP-A- 8 069 636
- JP-A- 9 293 270
- JP-A- 10 083 570
- JP-A- 11 339 332
- JP-A- 2001 243 655
- JP-A- 2002 074 748
- JP-A- 2002 144 736
- JP-A- 2002 352 472

## Description

### BACKGROUND OF THE INVENTION

### Field of the Invention

The present invention relates to an optical information recording medium for recording and reading out information at high speed and high density with the use of optical means such as a laser beam, and a method for manufacturing the same.

### Description of the Related Art

A technique of reading out or recording information at high density with the use of a laser beam is well known and has been put into practical use mainly as an optical disk.

The optical disks can be broadly classified into a reading out only type, a recordable type and a rewritable type. The reading out only type has been put into practical use as a compact disk and a laser disk, while the recordable type and the rewritable type have been put into practical use as a document file, a data file and the like. The rewritable optical disks are mainly classified into a magneto-optical type and a phase-change type. The phase-change optical disk utilizes occurrence of a reversible change in a record layer between an amorphous state and a crystalline state (or between crystalline states with different structures) due to laser beam irradiation. Specifically, the laser beam irradiation leads to a change in at least either refractive index or extinction coefficient of a thin film so that recording is performed, and amplitude of transmitted light or reflected light changes in this portion, leading to a change in volume of the transmitted light or the reflected light to reach a detection system, which is detected to read out a signal.

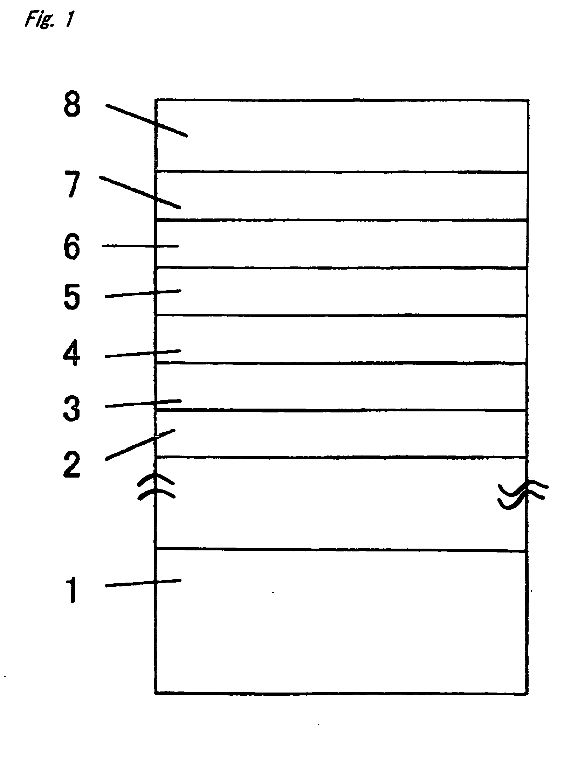

From a viewpoint of increasing a recording capacity of the optical disk, a single-sided double-layered configuration has been proposed [e.g. Japanese Patent Laid-Open No. 2001-273634 (pages 8-9, Fig. 1)].

Moreover, a double-layered optical information recording medium, which performs recording and reading out with the use of a blue-violet laser beam, is under study and development for seeking practical applications thereof. By using a laser beam with a shorter wavelength or an objective lens with a larger numerical aperture (NA) than conventionally used ones, it is possible to reduce a spot size of the laser beam to allow recording at even higher density.

A disk characteristic required for the single-sided multilayered recording medium is that an information layer for recording and reading out information, which is located near the laser beam incident side, has a high transmittance. In the case of the double-layered optical information recording medium, recording and reading out are performed on an information layer on the far side with the use of a laser beam having transmitted through an information layer near the laser beam incident side. Therefore, laser beam power required in recording information on the far side is obtained by dividing power for recording in the case where the information layer on the far side is a single information layer, by a transmittance of the layer on the near side. Namely, a large volume of laser beam power is required for recording and reading out in the case of the double-layered optical information recording medium. Hence the transmittance of the layer on the near side in particular needs to be high (e.g. 50%). There has been studied a technique of providing a transmittance adjustment layer composed of a dielectric substance in the information layer including at least a record layer and a reflection layer in this order seen from the laser beam incident side, so as to be in contact with the opposite side to the laser beam incident side of the reflection layer. There has further been studied a technique of optimizing a refractive index or an extinction coefficient of each of the transmittance adjustment layer and the reflection layer to realize a high transmittance (e.g. Japanese Patent Laid-Open No. 2002-591524).

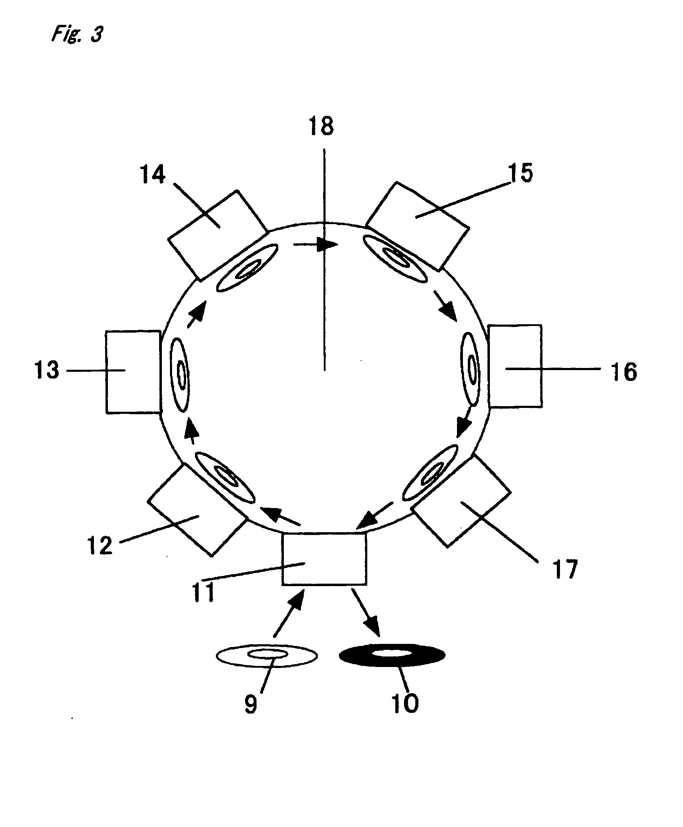

In forming the record layer, the reflection layer, the dielectric layer, the transmittance adjustment layer and the like in an optical disk by sputtering, a sheet-type sputtering device is often used because of the mass productivity thereof. Using Fig. 3, the sheet-type sputtering device is described. This device has the following mechanism. A disk substrate 9 prior to film formation is first put into a vacuum chamber (main chamber 18) through a load lock chamber 11. Subsequently, the disk substrate 9 is conveyed to a film formation chamber for forming a first layer. (film formation chamber 12 in this case) to form a layer, and then conveyed to a film formation chamber for forming a second layer (film formation chamber 13 in this case) to form another layer. Such a film forming operation is repeated to form desired layers, and a disk 10 after the film formation is taken out of the load lock chamber 11. The disk substrate 9 is successively put in through the load lock chamber 11. Using such a sheet-type sputtering device, a large number of magneto-optical recording mediums, DVD-RAMs and the like are under manufacturing.

EP 1 551 018 A1, which has been published after the priority date of the present application and hence is comprised in the state of the art pursuant to Art. 54(3) and (4) EPC discloses an optical information recording medium and a manufacturing method thereof. The recording medium comprises a plurality of information layers provided on a substrate and an optical separating layer provided between information layer adjacent to each other. In a first information layer, a lower protective layer, a lower interface layer, a recording layer, an upper protective layer, a reflective layer, a transmittance adjusting layer and a low refractive index layer are formed sequentially. The low refractive index layer is, for instance, formed by preparing a substrate for rate measurement and laminating SiO₂ as the low refractive index layer and TiO₂ as the transmittance adjusting layer sequentially on the substrate by sputtering.

### SUMMARY OF THE INVENTION

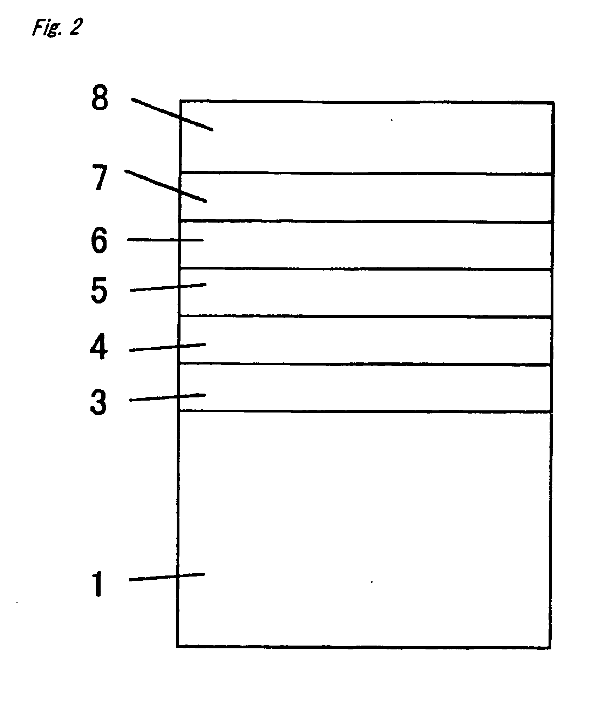

In studies of the single-sided multilayered recording medium, the development of the double-layered optical information recording medium was first tackled. For the purpose of raising the transmittance of the information layer on the incident side, a configuration (Fig. 2) with a titanium oxide layer provided as the transmittance adjustment layer was studied, to secure not less than 50% of the transmittance. However, during studies of the mass production of the single-sided multilayered information medium with such a configuration, the following problem became apparent.

The mass production with the use of a sheet-type sputtering device was studied here. In the case of using titanium oxide as the transmittance adjustment layer, when a large number of sample layers were formed, significant variations in transmittance as well as reflectance were observed to have occurred. As a result of a detailed review, the inventers have found that such variations are caused by large variations in thickness of the titanium oxide layer. Namely, it became clear from the experiment that the optical characteristics are very severe to the thickness of the transmittance adjustment layer, and it was found that a film formation rate and optical properties (refractive index, extinction coefficient) of titanium oxide are highly sensitive to an amount of oxygen in the film formation atmosphere, and thereby variations in trace amount of oxygen make the film formation rate unstable (the film formation rate decreases with a large amount of oxygen present) to have a large effect upon the reflectance, transmittance, and the like, of the disk. The oxygen (or water) on issue in this review as a cause of the instable film formation rate is presumably the one having been absorbed to a resin substrate and removed during the film formation to exert an effect. Nevertheless, titanium oxide has the most favorable optical properties in terms of the laser beam wavelength which was used for this review (titanium oxide has a large refractive index and a high light-transmittance property). It is thus essential to solve the above-mentioned problem and then develop a disk with a configuration using titanium oxide.

Therefore, a first object of the present invention is to provide an optical information recording medium comprising an uniform titanium oxide film as a constituent of an information layer.

Further, a second object of the present invention is to provide an optical information recording medium having a single-sided multilayered configuration with a high transmittance, by using the titanium oxide film as a transmittance adjustment layer, and a method for manufacturing the same..

In order to solve the above-mentioned problem, assiduous studies were conducted based upon the finding that the substance having been absorbed to a resin substrate is removed during the film formation to exerts an effect, and it was consequently found possible to form a substantially uniform titanium oxide layer in such a manner that a dielectric layer, whose refractive index is close to that of the titanium oxide layer or the substrate and whose film formation rate is not affected by the presence of oxygen, is formed on the substrate side and the titanium oxide layer is then formed on the dielectric layer.

Accordingly, the present invention relates to an optical information recording medium characterized by a structure that comprises: a record layer which is formed on a substrate and causes a reversible change between an amorphous phase and a crystalline phase by laser beam irradiation, the change being optically detectable by laser beam irradiation; a first dielectric layer which is formed between the record layer and the substrate, whose refractive index is close to that of the titanium oxide layer or the substrate, and whose thickness is practically not affected by the presence of oxygen; and a second dielectric layer which is formed between the record layer and the first dielectric layer, and contains titanium oxide as a main component.

It is preferable that the first dielectric layer be a dielectric layer mainly composed of at least niobium oxide.

While the dielectric layer may be formed of niobium oxide, it may also be formed of this oxide as a main component (the main component here means not less than 51 mol% of a component) and at least one selected from titanium oxide, ZrO₂, ZnO, Ta₂O₅, SiO₂, Al₂O₃, Bi₂O₃, Ti-N, Zr-N, Nb-N, Ta-N, Si-N, Ge-N, Cr-N, Al-N, Ge-Si-N, Ge-Cr-N and ZnS.

Further, although the titanium oxide layer may be formed of titanium oxide alone, it may also be formed of titanium oxide as a main component and at least one selected from ZrO₂, ZnO, niobium oxide, Ta₂O₅, SiO₂, Al₂O₃, Bi₂O₃, Ti-N, Zr-N, Nb-N, Ta-N, Si-N, Ge-N, Cr-N, Al-N, Ge-Si-N, Ge-Cr-N and ZnS. The main component here means not less than 51 mol% of a component.

In the optical information recording medium comprising an information layer including the record layer that causes a reversible change between an amorphous phase and a crystalline phase, which is optically detectable by irradiating the laser beam on the disk-like substrate, the present invention is applicable when the information layer is formed of at least two layers. In this case, the first and second dielectric layers are used as the transmittance adjustment layers as described in examples. Namely, it is preferable that the first information layer includes the transmittance adjustment layer on the side closer to the substrate than the record layer, seen from the laser beam incident side, and the transmittance adjustment layer be structured by laminating a first transmittance adjustment layer containing at least niobium oxide as a main component, and a second transmittance adjustment layer containing at least titanium oxide as a main component.

In the single-sided multilayered optical information recording medium, it is preferable to provide a reflection layer between the second transmittance adjustment layer and the record layer, for optimizing a refractive index and an extinction coefficient of the both layers to realize a high transmittance (e.g. Japanese Patent Laid-Open No. 2002-591524). It is to be noted that a material mainly composed of a metal element such as Ag, Au or Al can be used for the reflection layer. It is also possible to obtain the similar optical characteristic to that of a non-transmittance layer by laminating two or more kinds of protection layers having different refractive indexes in place of the metal reflection layer.

Moreover, the second transmittance adjustment layer containing at least titanium oxide as a main component is a layer containing not less than 51% of titanium oxide. While this layer may be composed of titanium oxide alone, as described above, it can also be formed of titanium oxide as a main component and at least one selected from ZrO₂, ZnO, niobium oxide, Ta₂O₅, SiO₂, Al₂O₃, Bi₂O₃, Ti-N, Zr-N, Nb-N, Ta-N, Si-N, Ge-N, Cr-N, Al-N, Ge-Si-N, Ge-Cr-N and ZnS. It should be noted that the first transmittance adjustment layer having a thickness of about 10 nm is sufficiently thick so long as being capable of blocking the effect of oxygen, whereas the second transmittance adjustment layer preferably has a thickness in the range of 10 to 40 nm due to the need for realizing a high transmittance in the relation with the reflection layer, as described above.

Furthermore, in order to solve the above-mentioned problem, a method for manufacturing an optical information recording medium comprises the steps of: forming a first dielectric layer composed of niobium oxide, or mainly composed of the same, on a substrate; forming a second dielectric layer composed of titanium oxide, or mainly composed of the same, after the formation of the first dielectric layer; and forming a record layer that causes a reversible change between an amorphous phase and a crystalline phase, which is optically detectable by laser beam irradiation, after the formation of the second dielectric layer.

The first dielectric layer composed of niobium oxide or mainly composed of the same, and the second dielectric layer composed of the titanium oxide or mainly composed of the same, are formed using a sheet-type sputtering device. In the case where the substrate is conveyed to the respective chambers for forming the layers in the above-mentioned order from a load lock chamber that puts or takes the substrate into or out of a vacuum chamber in the sputtering device, to form the first and second dielectric layer, it is preferable to remove water and oxygen from the substrate prior to the formation of the first and the second dielectric layers.

It is therefore preferable to allow the substrate to pass through at least one chamber for promoting the removal of water and oxygen from the substrate, which is provided between the load lock chamber and the film formation chamber for forming a dielectric layer.

It is possible by the optical information recording medium and the method for manufacturing the same according to the present invention to form a uniform titanium oxide layer. Further, when such a titanium oxide is used as the transmittance adjustment layer, the thickness of the layer can be stabilized, thereby enabling provision of a single-sided multilayered optical information recording medium with excellent mass productivity.

### BRIEF DESCRIPTION OF THE DRAWINGS

Fig. 1 is a structural view of an optical disk used in an embodiment of the present invention.
Fig. 2 is a structural view of an optical disk used in an embodiment of the present invention.
Fig. 3 is a structural view of a sheet-type sputtering device as an optical disk manufacturing device.
Fig. 4 is a view showing variations in transmittance of a disk in the case where a transmittance adjustment layer is made double-layered and the case where it is not made double-layered, in the present embodiment.
Fig. 5 is a view showing dependency of a film formation rate, obtained using a transmittance adjustment layer material, upon an amount of an oxygen gas added, in the present embodiment.
Fig. 6 is a view showing variations in transmittance of the disk in the case where a chamber for degassing the substrate is used before the formation of the transmittance adjustment layer and the case where such a chamber is not used, in the embodiment.

### DETAILED DESCRIPTION OF THE PREFERRED EMBODIMENTS

### (Example 1)

In the following, the present invention is described using drawings.

Using Fig. 2, a structure of a disk used in the present example is described. While the single-sided multilayered information recording medium is under development, in the present embodiment, only the first information layer, which is the top layer on the laser beam incident side, was formed on the substrate and the characteristic stability thereof was reviewed.

A substrate 1 is made of a resin plate of polycarbonate, PMMA or the like, a glass plate, or the like.

On the substrate 1, a second information layer, not shown in the figure, is provided on the substrate side, and a first information layer is then provided on the second information layer 2. The first information layer at least includes a reflection layer 4, dielectric layers 5 and 7, a record layer 6, and a transmittance adjustment layer 3.

As a material for the dielectric layers 5 and 7 used can be a material mainly composed of an oxide of Al, Si, Ta, Mo, W, Zr or the like, a sulfide such as ZnS or the like, a nitride of Al, B, Ge, Si, Ti Zr or the like, or a fluoride of Pb, Mg, La or the like. In the present embodiment, ZnS-20 mol% SiO₂ was used for the dielectric layer 7 while GeN was used for the dielectric layer 5.

As a material for the record layer 6, a phase-changable material mainly composed of Te, In, Se or the like can be used. Examples of well-known main components of the phase-change materials may include TeGeSb, TeGeSn, TeGeSnAu, SbSe, SbTe, SbSeTe, In-Te, In-Se, In-Se-Tl, InSbInSbSe, and GeSbTeAg. As phase-changable optical disks having been commercialized or being vigorously researched are a GeSbTe system and an AgGeSbTe system. In the present example, the GeSbTe system was mainly used.

As for the reflection layer 4, it is possible to use a material mainly composed of a metal element such as Ag, Au or Al. It is also possible to obtain the similar optical characteristic to that of a non-transmittance layer by laminating two or more kinds of protection layers having different refractive indexes in place of the metal reflection layer.

In the present embodiment, the metal reflection layer mainly composed of Ag was used.

As for the transmittance adjustment layer 3, the larger the refractive index in a laser beam wavelength for information recording, the higher the transmittance can be made. In the present example, a laser beam wavelength of 405 nm was used. Examples of the material having a high refractive index in this wavelength may include titanium oxide and niobium oxide (whose refractive indexes are 2.7 and 2.5, respectively.)

Moreover, it is preferable to provide C and a nitride interface layer between the record layer 6 and the dielectric layers 5 and 7, for the purposes of enhancing crystallizability of the record layers and securing a good cycle characteristic of record erasure. The main material of the nitride interface layer is a material including at least one element of Ge, Cr, Si, Al and Te.

As the method for forming each of the protection layer, the record layer, the reflection layer, the nitride interface layer, the transmittance adjustment layer, and other layers, an electron beam deposition method, a sputtering method, an ion plating method, a CVD method, a laser sputtering method or the like is normally adapted. In the present embodiment, the sputtering method was applied.

The structure of the disk used in the present embodiment is specifically described. As an example of the disk structure, titanium oxide as the transmittance adjustment layer 3, an Ag reflection layer, GeN, Ge₂₂Sb₂₅Te₅₃ (at%) and ZnS-20 mol% SiO₂ were formed in this order by the magnetron sputter method on a substrate made of polycarbonate having a diameter of 120 mm and a thickness of 1.1 mm, whose surface was covered with a concavo-convex guide groove having a pitch of 0.3 um and a groove depth of 20 nm, so as to form the first information layer. Subsequently, a light transmission layer with a thickness of 0.1 mm was formed by the spin coating method.

First shown are the results of reviewing the effect of improving variations in transmittance in the case where the transmittance adjustment layer was made double-layered.

As a reference, the transmittance adjustment layer 3 formed of only one titanium oxide layer was used. The disk was manufactured in the following method. On a polycarbonate substrate with a thickness of 1.1 mm, titanium oxide of 20 nm as the transmittance adjustment layer 3, the Ag reflection layer of 10 nm, GeN of 15 nm, Ge₂₂Sb₂₅Te₅₃ (at%) of 7 nm and ZnS-20 mol% SiO₂ of 40 nm were formed in this order using the sheet-type sputtering device, and 100 disks having the equivalent configuration were manufactured.

Next, when the transmittance adjustment layer 3 of the present invention shown in Fig. 1 was made double-layered, namely when niobium oxide was used as the transmittance adjustment layer 2 and titanium oxide was used as the transmittance adjustment layer 3, the disk was manufactured in the following method. On a polycarbonate substrate with a thickness of 1.1 mm, niobium oxide of 10 nm as the transmittance adjustment layer 2, titanium oxide of 10 nm as the transmittance adjustment layer 3, the Ag reflection layer of 10 nm, GeN of 15 nm, Ge₂₂Sb₂₅Te₅₃ (at%) of 7 nm and ZnS-20 mol% SiO₂ of 40 nm were formed in this order using the sheet-type sputtering device, and 100 disks having the equivalent configuration were manufactured.

These 100 disks each were initialized (generally in the phase change optical disk, this is a step of crystallizing a disk with the use of a laser beam or the like, since the record layer immediately after formed is in an amorphous state), to measure a transmittance of the disk in a crystalline state.

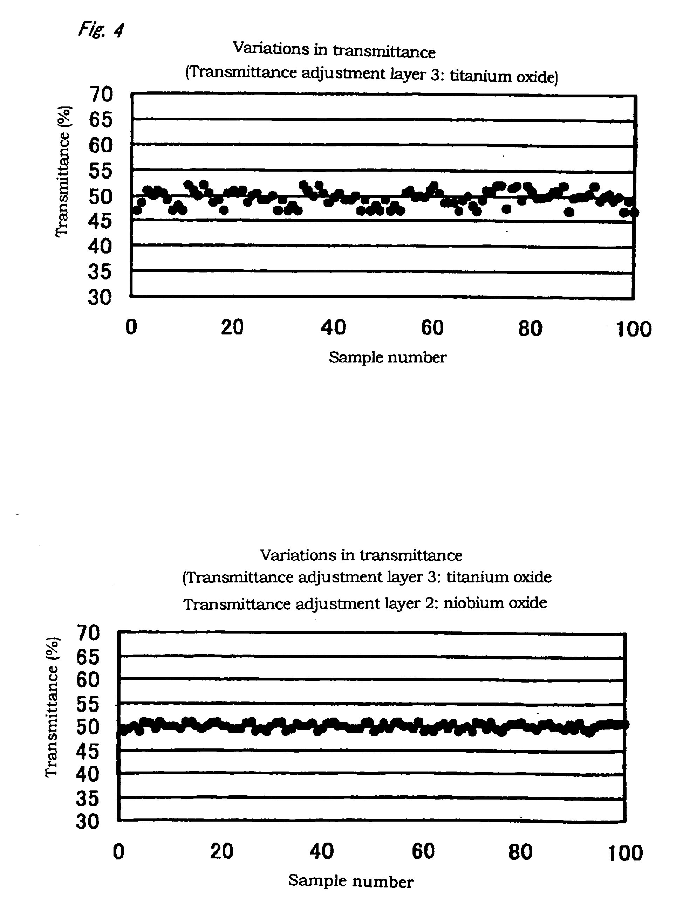

A transmittance obtained in a laser beam wavelength of 405 nm, which is the same as the laser beam wavelength for actually recording and reading out information on these disks, was evaluated using a spectrometric instrument, to review the variations in transmittance. The results are shown in Fig. 4.

It was found from Fig. 4 that, when the transmittance adjustment layer as the reference is single-layered, namely when titanium oxide is used as the transmittance adjustment layer 3, the variations in transmittance are p-p5 %. With the variations in transmittance being as large as p-p5 %, an amount of the laser beam to reach the layer on the far side, seen from the laser beam incident side, varies by the variations in transmittance in the case of the single-sided multilayered medium. Further, the variations in transmittance have an effect upon the refractive index with the square of the transmittance, thus having a large effect upon a signal characteristic of the layer on the far side.

On the other hand, when the transmittance adjustment layer is made double-layered as in the present invention, namely when niobium oxide was used as the transmittance adjustment layer 2 and titanium oxide was used as the transmittance adjustment layer 3, the variations in transmittance are p-p2.5%, which has improved from the above case.

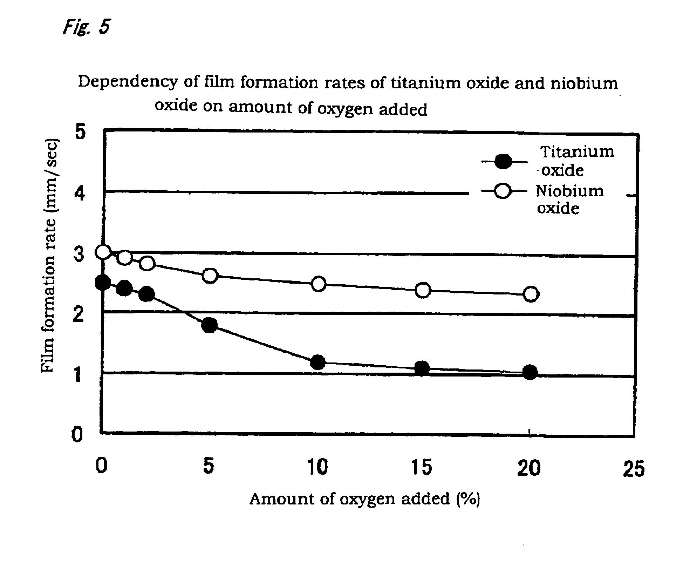

The difference in variations between these two transmittances can be explained using the difference in variations in thickness of the transmittance adjustment layer. Here shown the results of reviewing the respective dependencies of sputtering rates of titanium oxide and niobium oxide upon an amount of oxygen. Either of the two materials was produced by mixing Ar gas and O₂ gas in various ratios under the same film formation conditions as used in the present embodiment, using a sputtering target with which a DC discharge can be performed so as to set a sputtering power to 2 kW and a sputtering gas pressure to 0.3 Pa, and the obtained sputtering rates were then compared. The results are shown in Fig. 5.

It is revealed from Fig. 5 that the sputtering rate of titanium oxide depends upon O₂ in a larger degree than that of niobium oxide, and thus significantly varies with increase in amount of O₂ added.

For this reason, there are differences in moisture absorbing state among the 100 substrates. Titanium oxide whose sputtering rate greatly depends upon O₂ is significantly affected by the increase in amount of O₂, and the thickness of the titanium oxide layer thus varies. On the other hand, it is thought that niobium oxide whose sputtering rate depends upon O₂ in a small degree is slightly affected by the increase in amount of O₂, and the thickness of the niobium oxide layer varies in a small degree.

Practically, in a state where no oxygen is added to titanium oxide or niobium oxide, an extinction coefficient is not zero, i.e. the layers perform absorption. This leads to a decrease in amount of light to transmit through the first information layer, and in the case of forming a multilayered medium, the amount of the laser beam to reach the layer on the far side, seen from the laser beam incident side, decreases, which is not desirable. It is therefore necessary to add O₂ so as to make the extinction coefficient zero. Considering this from the viewpoint of the extinction coefficient, it is necessary to add not less than 2% of oxide to both titanium oxide and niobium oxide, and also in this review, 2% of oxygen was added.

As thus described, it was found that the dependency of the sputtering rate of the niobium oxide upon O₂ is smaller than that of titanium oxide. It is noted that the refractive index of niobium oxide is slightly smaller than that of titanium oxide, causing a small decrease in transmittance although the transmittance adjustment layer is to serve to adjust the transmittance. However, it goes without saying that, since the variations in sputtering rate are resulted in large variations in disk characteristics, it is desirable to use niobium oxide whose sputtering rate depends on O₂ in a small degree to make the transmittance adjustment layer double-layered so as to suppress the variations in disk characteristics.

It should be noted that, although the case of using niobium oxide and titanium oxide for the transmittance adjustment layers 2 and 3 was described in the present example, a similar result to that of this case was obtained when the transmittance adjustment layer 3 contains titanium oxide as a main component and at least one material selected from ZrO₂, ZnO, niobium oxide, Ta₂O₅, SiO₂, Al₂O₃, Bi₂O₃, Ti-N, Zr-N, Nb-N, Ta-N, Si-N, Ge-N, Cr-N, Al-N, Ge-Si-N, Ge-Cr-N and ZnS (the main component here means not less than 51 mol% of a material).

It should be noted that, in the present example, a similar result to that of the above case was also obtained when the transmittance adjustment layer 2 contains niobium oxide as a main component and at least one material selected from titanium oxide, ZrO₂, ZnO, Ta₂O₅, SiO₂, Al₂O₃, Bi₂O₃, Ti-N, Zr-N, Nb-N, Ta-N, Si-N, Ge-N, Cr-N, Al-N, Ge-Si-N, Ge-Cr-N and ZnS (the main component termed here means not less than 51 mol% of material).

### (Example 2)

The case is described where the substrate is conveyed to at least the respective chambers for forming the transmittance adjustment layer 3, the reflection layer 4 and record layer 6 in this order from the load lock chamber that puts or takes the substrate into or out of the vacuum chamber in the sputtering device, and at least one chamber for vacuuming the substrate is provided between the load lock chamber and the chamber for forming the transmittance adjustment layer 3.

The configuration of the disk is the same as that of the disk comprising the transmittance adjustment layer composed of titanium oxide alone, used as the reference in Example 1.

Using the sheet-type sputtering device, the above-mentioned review was conducted. Here reviewed were variations in transmittance of the disk in the case where titanium oxide layer was formed upon conveyance of the substrate from the load lock chamber and in the case where the chamber for degassing the substrate was provided. Since the disk film forming tact was set to 10 seconds in this review, the time for degassing the substrate in the degassing chamber was set to 7 seconds.

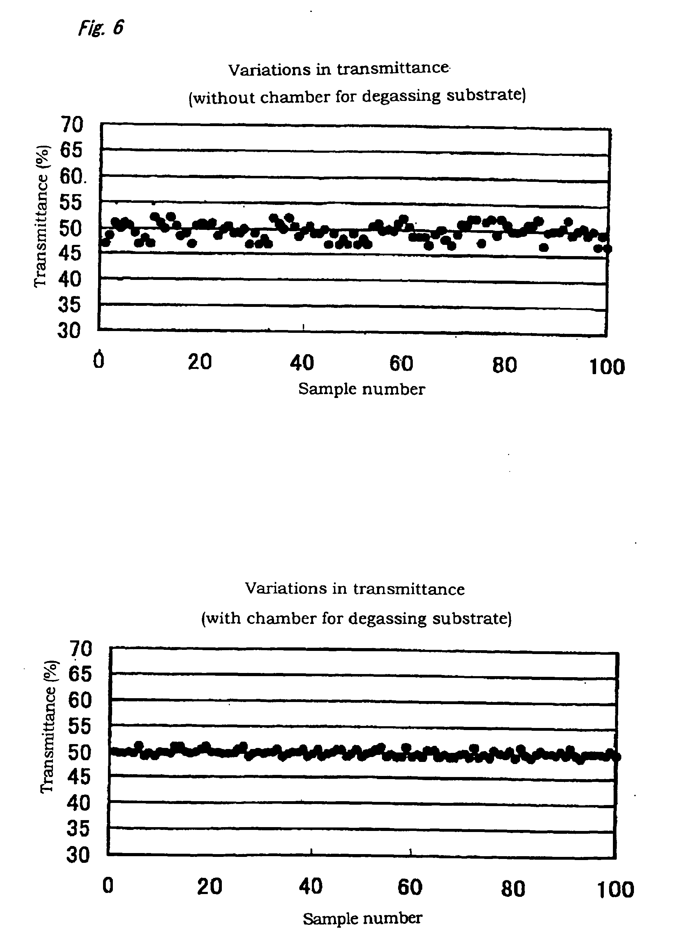

A transmittance obtained with a laser beam wavelength of 405 nm, which is the same as the laser beam wavelength for actually recording and reading out information on these disks, was evaluated using a spectrometric instrument. The results are shown in Fig. 6.

It was found from Fig. 6 that the variations in transmittance are p-p5 % in the case of no chamber for degassing the substrate.

On the other hand, the variations in transmittance are p-p2 % in the case with the chamber for degassing the substrate as in the present invention, which has been improved from the above case.

The improvement of the variations is presumably attributed to the decreased variations in amount of O₂ (water) having been absorbed to the substrate before the substrate is put into the load lock chamber, since O₂, which has a large effect upon the sputtering rate of the titanium oxide, is reduced in the degassing chamber.

As thus described, in the film formation method using the degassing chamber, it is possible to realize an optical information recording medium having disk characteristics that vary in a small degree.

It should be noted that, although the case of using titanium oxide as the transmittance adjustment layer 3 was described in the present example, a similar result to this case was also obtained when the transmittance adjustment layer 3 contains titanium oxide as a main component and at least one material selected from ZrO₂, ZnO, niobium oxide, Ta₂O₅, SiO₂, Al₂O₃, Bi₂O₃, Ti-N, Zr-N, Nb-N, Ta-N, Si-N, Ge-N, Cr-N, Al-N, Ge-Si-N, Ge-Cr-N and ZnS (the main component here means not less than 51 mol% of a component).

As thus described, according to the optical information recording medium and the method for manufacturing the same of the present invention, it is possible to improve production efficiency in mass production of optical disks in a disk initialization step.

## Claims

1. An optical information recording medium, comprising:
a record layer (6) which is formed on subtrate (1) and causes a reversible change between an amorphous phase and a crystalline phase by laser beam irradiation, the change being optically detectable;
a first dielectric layer (2) which is formed between the record layer (6) and the substrate (1), and mainly composed of niobium oxide; and
a second dielectric layer (3) which is formed between the record layer (6) and the first dielectric layer (2), and mainly composed of titanium oxide.

2. The optical information recording medium according to claim 1, wherein the second dielectric layer (3) contains 51mol% or more of titanium oxide.

3. The optical information recording medium according to claim 1, wherein the second dielectric layer (3) has a thickness in the range of 10 to 40 nm.

4. The optical information recording medium according to claim 1, wherein a second record layer is provided on the opposite side to the record layer (6) from the substrate (1).

5. The optical information recording medium according to claim 1, wherein a reflection layer (4) is provided between the second dielectric layer (3) and the record layer (6).

6. A method for manufacturing an optical information recording medium, comprising the steps of:
forming a first dielectric layer (2) mainly composed of niobium oxide on a substrate (1);
forming a second dielectric layer (3) mainly composed of titanium oxide on the first dielectric layer (2) formed; and
forming a record layer (6) on the second dielectric layer (3) formed, on which a reversible and optically detectable change can be made to be between an amorphous phase and a crystalline phase by laser beam irradiation.

7. The method for manufacturing an optical information recording medium according to claim 6, wherein the second dielectric layer (3) contains not less than 51mol% of titanium oxide.

8. The method for manufacturing an optical information recording medium according to claim 6, wherein the second dielectric layer (3) is formed in a thickness of 10 to 40 nm as a transmittance adjustment layer.

9. The method for manufacturing an optical information recording medium according to claim 6, wherein when the first dielectric layer (2), the second dielectric layer (3) and the record layer (6) are formed on a substrate (1), water and oxygen are removed from the substrate (1) before the formation of the first dielectric layer (2) or the second dielectric layer (3).

10. The method for manufacturing an optical information recording medium according to claim 6, further comprising a step of forming a second record layer that causes a reversible change from an amorphous phase to a crystalline phase, which is optically detectable by laser beam irradiation.

11. The method for manufacturing an optical information recording medium according to claim 6, comprising a step of forming a reflection layer (4) between the second dielectric layer (3) and the record layer (6).

## Patentansprüche

1. Optisches Informationsaufzeichnungsmedium mit:
einer Aufzeichnungsschicht (6), die auf einem Substrat (1) gebildet ist und die eine reversible Änderung zwischen einer amorphen Phase und einer kristallinen Phase durch Laserstrahlbestrahlung hervorruft, wobei die Änderung optisch erfassbar ist,
einer ersten dielektrischen Schicht (2), die zwischen der Aufzeichnungsschicht (6) und dem Substrat (1) gebildet ist und im wesentlichen aus Nioboxid besteht, und
einer zweiten dielektrischen Schicht (3), die zwischen der Aufzeichnungsschicht (6) und der ersten dielektrischen Schicht (2) gebildet ist und im wesentlichen aus Titanoxid besteht.

2. Optisches Informationsaufzeichnungsmedium nach Anspruch 1,
wobei die zweite dielektrische Schicht (3) 51 Molprozent oder mehr an Titanoxid enthält.

3. Optisches Informationsaufzeichnungsmedium nach Anspruch 1,
wobei die zweite dielektrische Schicht (3) eine Dicke im Bereich von 10 bis 40 nm besitzt.

4. Optisches Informationsaufzeichnungsmedium nach Anspruch 1,
wobei eine zweite Aufzeichnungsschicht auf der der Aufzeichnungsschicht (6) gegenüberliegenden Seite des Substrats (1) vorgesehen ist.

5. Optisches Informationsaufzeichnungsmedium nach Anspruch 1,
wobei eine Reflektionsschicht (4) zwischen der zweiten dielektrischen Schicht (3) und der Aufzeichnungsschicht (6) vorgesehen ist.

6. Verfahren zum Herstellen eines optischen Informationsaufzeichnungsmediums, mit den Schritten:
Bilden einer ersten dielektrischen Schicht (2), die im wesentlichen aus Nioboxid besteht, auf einem Substrat (1),
Bilden einer zweiten dielektrischen Schicht (3), die im wesentlichen aus Titanoxid besteht, auf der gebildeten ersten dielektrischen Schicht (2), und
Bilden einer Aufzeichnungsschicht (6) auf der gebildeten zweiten dielektrischen Schicht (3), an der eine reversible und optisch erfassbare Änderung zwischen einer amorphen Phase und einer kristallinen Phase durch Laserstrahlbestrahlung veranlasst werden kann.

7. Verfahren zum Herstellen eines optischen Informationsaufzeichnungsmediums nach Anspruch 6,
wobei die zweite dielektrische Schicht (3) nicht weniger als 51 Molprozent an Titanoxid enthält.

8. Verfahren zum Herstellen eines optischen Informationsaufzeichnungsmediums nach Anspruch 6,
wobei die zweite dielektrische Schicht (3) in einer Dicke von 10 bis 40 Nanometern als eine Transmittanzjustierschicht gebildet ist.

9. Verfahren zum Herstellen eines optischen Informationsaufzeichnungsmediums nach Anspruch 6,
wobei, wenn die erste dielektrische Schicht (2), die zweite dielektrische Schicht (3) und die Aufzeichnungssicht (6) auf einem Substrat (1) gebildet werden, Wasser und Sauerstoff von dem Substrat (1) vor der Bildung der ersten dielektrischen Schicht (2) oder der zweiten dielektrischen Schicht (3) entfernt werden.

10. Verfahren zum Herstellen eines optischen Informationsaufzeichnungsmediums nach Anspruch 6,
ferner mit einem Schritt des Bildens einer zweiten Aufzeichnungsschicht, die eine reversible Änderung von einer amorphen Phase zu einer kristallinen Phase hervorruft, die durch Laserstrahlbestrahlung optisch erfassbar ist.

11. Verfahren zum Herstellen eines optischen Informationsaufzeichnungsmediums nach Anspruch 6,
mit einem Schritt des Bildens einer Reflexionsschicht (4) zwischen der zweiten dielektrischen Schicht (3) und der Aufzeichnungsschicht (6).

## Revendications

1. Support d'enregistrement d'informations optiques, comprenant:
une couche d'enregistrement (6) qui est formée sur un substrat (1) et provoque un changement réversible entre une phase amorphe et une phase cristalline par une irradiation de faisceaux laser, le changement étant optiquement détectable;
une première couche diélectrique (2) qui est formée entre la couche d'enregistrement (6) et le substrat (1), et composée principalement d'oxyde de niobium; et
une deuxième couche diélectrique (3) qui est formée entre la couche d'enregistrement (6) et la première couche diélectrique (2), et composée principalement d'oxyde de titane.

2. Support d'enregistrement d'informations optiques selon la revendication 1, dans lequel la deuxième couche diélectrique (3) contient 51 % molaire ou plus d'oxyde de titane.

3. Support d'enregistrement d'informations optiques selon la revendication 1, dans lequel la deuxième couche diélectrique (3) a une épaisseur dans la gamme de 10 à 40 nm.

4. Support d'enregistrement d'informations optiques selon la revendication 1, dans lequel une deuxième couche d'enregistrement est pourvue sur le côté opposé à la couche d'enregistrement (6) depuis le substrat (1).

5. Support d'enregistrement d'informations optiques selon la revendication 1, dans lequel une couche de réflexion (4) est pourvue entre la deuxième couche diélectrique (3) et la couche d'enregistrement (6).

6. Procédé de fabrication d'un support d'enregistrement d'informations optiques, comprenant les étapes qui consistent à:
former une première couche diélectrique (2) composée principalement d'oxyde de niobium sur un substrat (1);
former une deuxième couche diélectrique (3) composée principalement d'oxyde de titane sur la première couche diélectrique (2) formée; et
former une couche d'enregistrement (6) sur la deuxième couche diélectrique (3) formée, sur laquelle un changement réversible et optiquement détectable peut être effectué de manière à se trouver entre une phase amorphe et une phase cristalline par une irradiation de faisceaux laser.

7. Procédé de fabrication d'un support d'enregistrement d'informations optiques selon la revendication 6, dans lequel la deuxième couche diélectrique (3) contient pas moms de 51% molaire d'oxyde de titane.

8. Procédé de fabrication d'un support d'enregistrement d'informations optiques selon la revendication 6, dans lequel la deuxième couche diélectrique (3) est formée de manière à avoir une épaisseur de 10 à 40 nm en tant que couche d'ajustement de transmittance.

9. Procédé de fabrication d'un support d'enregistrement d'informations optiques selon la revendication 6, dans lequel lorsque la première couche diélectrique (2), la deuxième couche diélectrique (3) et la couche d'enregistrement (6) sont formées sur un substrat (1), l'eau et l'oxygène sont retirées du substrat (1) avant la formation de la première couche diélectrique (2) ou de la deuxième couche diélectrique (3).

10. Procédé de fabrication d'un support d'enregistrement d'informations optiques selon la revendication 6, comprenant en plus une étape qui consiste à former une deuxième couche d'enregistrement qui provoque un changement réversible entre une phase amorphe et une phase cristalline, qui est optiquement détectable par une irradiation de faisceaux laser.

11. Procédé de fabrication d'un support d'enregistrement d'informations optiques selon la revendication 6, comprenant une étape qui consiste à former une couche de réflexion (4) entre la deuxième couche diélectrique (3) et la couche d'enregistrement (6).
